Europäisches Patentamt

**European Patent Office**

Office européen des brevets

(19)

(11) Publication number: **0 083 558**
A2

(12)

# EUROPEAN PATENT APPLICATION

(21) Application number: **82830313.1**

(22) Date of filing: **31.12.82**

(51) Int. Cl.³: **A 61 C 3/02, A 61 C 8/00**

(30) Priority: **31.12.81 IT 2594981**

(43) Date of publication of application: **13.07.83**
**Bulletin 83/28**

(84) Designated Contracting States: **AT BE CH DE FR GB LI NL SE**

(71) Applicant: **Galliani, Alessandro, Via Novegro, 13/F, I-20090 Segrate (Milano) (IT)**
Applicant: **Bellavia, Calogero, Via Lario, 21, I-20100 - Milano (IT)**

(72) Inventor: **Galliani, Alessandro, Via Novegro, 13/F, I-20090 Segrate (Milano) (IT)**

(74) Representative: **Cicogna, Franco, Ufficio Internazionale Brevetti Dott.Prof. Franco Cicogna Via Visconti di Modrone, 14/A, I-20122 - Milano (IT)**

(54) **Circular blade structure for osseous implantation techniques.**

(57) The present invention relates to a circular blade structure for osseous implantation techniques, which comprises a reduced thickness cylindrical hollow body (2).

That body (2) is opened at the bottom thereof and, at the top thereof, is closed by a top member (3) meeting with the side surface of the cylindrical body (2).

From the mentioned top member (3) a stub extends upwardly (6), effective to allow for a dental prosthesis to be applied.

Alternatively, in the same top member (3) a central through hole (31) may be formed, effective to receive a screw member (32) provided with a shaped head (33).

The side surface (4) of the cylindrical body (2) may be housed in a cylindrical crown seat, having such a shape mating that of the side surface (4), and which is formed on the maxillary bone, in such a way that a bone portion is located at the inner face of the top member, in order to prevent the blade from sinking in the sponge tissue.

The present invention relates to a circular
blade structure for osseous implantation techniques.

As it is well known the current osseous
implantation techniques are based on the concept of
inserting inside the cortical portion of the
maxillary bones a blade member thereto an upper
stub is coupled therewith the dental prosthesis
is associated.

The presently used blades have a substantially flattened and elongated configuration of
essentially wedge shape, starting from the lower edge
thereof. In order to apply the mentioned blades, it
is necessary to provide surgical grooves having
comparatively large size in order to allow for the
blade to be introduced into the sponge tissue; thus,
due to the mentioned requirement, a rather long period
of time is necessary for the recovery osteogenesis.

Moreover, with the blades of the thereinabove
mentioned type, the forces exerced by the masticatory
load cause the blade to "sink" into the sponge
tissue, thereby the blade may hardly be affixed to
the maxillary bone.

Infact, as it is also known, the sponge tissue

-3-

can not be transformed into a compact osseous
tissue, notwithstanding the formation of a callous
bony tissue.

Thus, the blades of the mentioned type
are able of anchoring to the cortical portion of
the maxillary bone only at the narrow zone at the
base of the stub, thereat the recovery of the bony
tissue is possible.

It should also be noted that some of the
known blades are provided with through openings,
of any suitable shape, in order to allow for the
growing bone to satisfactorily support the blade
itself.

Those characteristics, though they are
theoretically preferable, from a conceptual standpoint, have been practically unrealizable, since the
growing bone would be located on the force vertical
axis, thereby it would not be able of suitably
support said forces.

Accordingly, the task of the present invention
is to overcome the thereinabove mentioned drawbacks,
by providing a new structured circular blade which
is so designed as not to sink into the cortical portion

-4-

of the maxillary bone, because of the forces exerced
by the masticatory load, thereby affording the
possibility of being firmly anchored to the maxillary
bone already from the starting of the application
of said blade.

Within the mentioned task, it is a primary
object of the present invention to provide such a
blade which is effective to reduce to a minimum the
size of the surgical groove to be made in the
maxillary bone, thereby reducing the operating
traumas, and affording the possibility of perfectly
locking the blade in its position, from the starting
of the application thereof.

Yet another object of the present invention
is to provide such a circular blade which, owing
to the structural and constructional features thereof,
is effective to be surely affixed, while preventing
traumas from occurring.

The thereinabove task and objects, as well as
yet other objects, which will become more apparent
hereinafter, are achieved by a circular blade structure,
particularly for osseous implantation techniques,
characterized in that it comprises a cylindrical
hollow body, of reduced thickness, said cylindrical body being opened at the bottom thereof an closed at the top thereof by a top member coupled to the side surface of said cylindrical body, at said top member a stub member being provided, upwardly extending and effective to allow for a dental prothesis to be applied, the side surface of said cylindrical body being effective to be housed in a cylindrical seat having a shape mating that of said side surface and formed on the maxillary bone.

Further characteristics and advantages of the present invention will become more apparent hereinafter from the following description of a preferred embodiment thereof, which is illustrated by way of an indicative but not limitative example in the accompanying drawings, where:

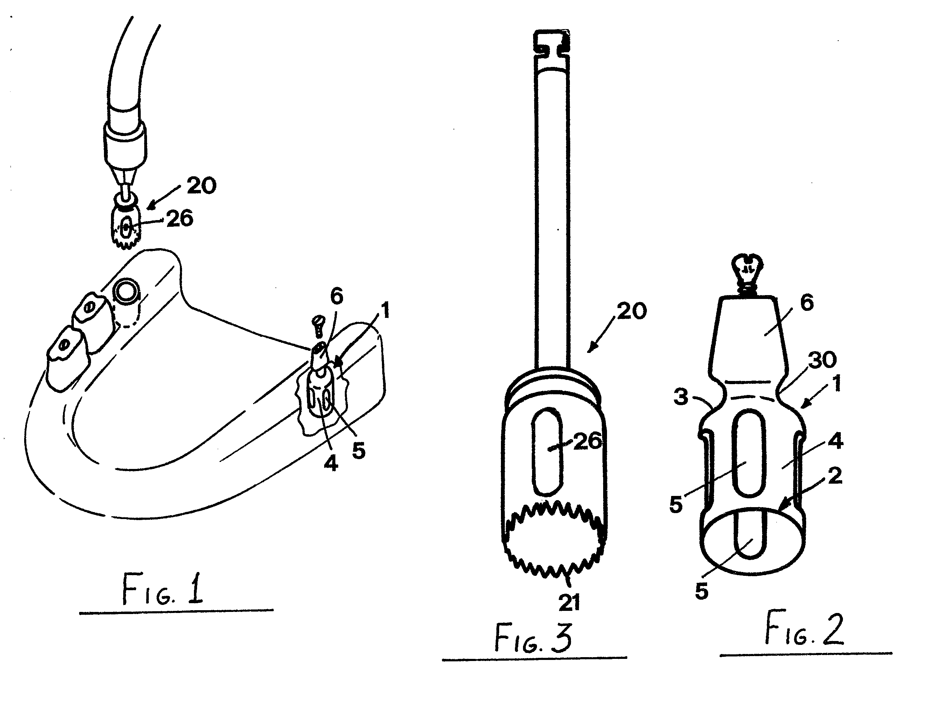

fig.1 illustrates a schematic perspective view of a maxillary bone thereto a circular blade according to the present invention has been applied;

fig.2 illustrates a perspective view of the blade according to the present invention;

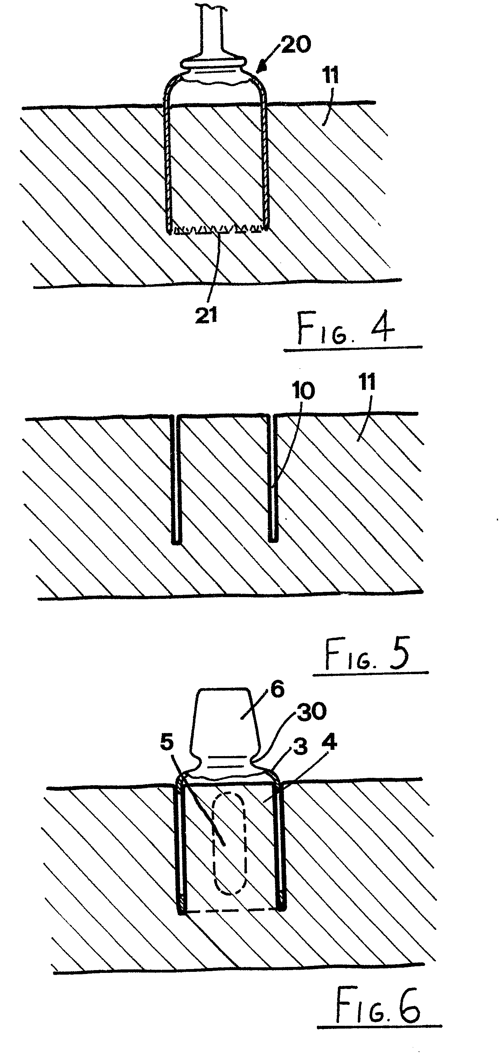

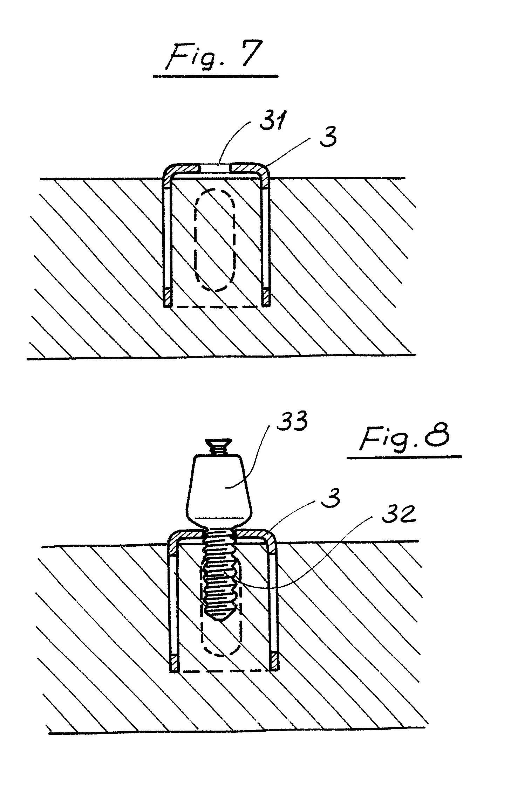

fig.3 schematically illustrates the cylindrical cutter used for making the seat in the maxillary bone;

and

figs.4 to 6 illustrate,in succession,the procedure for making the mentioned seat in the maxillary bone,the shape of the seat as made in the maxillary bone,and the circular blade according to the present invention,as applied in the mentioned seat,

fig.7 illustrates a circular blade provided with a through hole,as applied to the mentioned seat formed in the maxillary bone;

fig.8 illustrates a shaped-head screw member,as inserted into the mentioned bored blade.

With reference to the thereinabove mentioned figures,the circular blade for osseous implantation techniques according to the present invention,which is generally indicated at 1,comprises a cylindrical body 2,hollow in the inside thereof,and having a very reduced thickness.

At the bottom thereof the cylindrical body 2 is opened,while at the top thereof it is closed by a top member 3,meeting with the side surface 4 of said body 2.

On the side surface 4 of said cylindrical body 2 there are provided longitudinal through oepnings 5,which are preferably evenly distributed on the surface thereof.

From the top member 3 upwardly extends a stub 6 which,as it will become more apparent thereinafter,is effective to allow for a dentat prosthesis to be applied.

The above stub 6 is slightly slanted with respect to the vertical axis of the cylindrical body 2,in order to allow for said dentat prosthesis to be optimally located according to the natural slanting of the teeth,adjoining the prosthesis being applied.

The mentioned side surface 4 of the cylindrical body 2 may be inserted into a cylindrical crown seat 10,which may be formed at the maxillary bone,the latter being schematically indicated at 11 in the drawing.

In order to form the mentioned seat 10, there is used a cutter 20,of cylindrical cup shape,and having a cutting lower edge 21,effective to form on the maxillary bone 11 the surgical groove required for applying the circular blade.

Preferably openings 26 are formed on the cutter in order to ejet the conventional cooling jets.

The latter prevent the building up of high temperatures which would be susceptible of deleteriously damaging the maxillary bone.

With the illustrated structure, as the circular blade is inserted into the seat 10, it will have its top member 3 located above an osseous portion; due to that reason the top member will practically act as a stop member effective to prevent the circular blade from sinking under the effect of the vertically directed forces generated during the mastication.

Moreover, the circular shape of the blade according to the present invention affords the possibility of distributing the masticatory load on a greater cylindrical surface, thereby preventing side slanting movements from occurring.

The osseous portion, which is held encompassed by the blade, in addition to preventing sinking from occurring, as it was thereinabove mentioned, also acts in such a way as to favour the bone growth, through the through openings 5, thereby embedding perfectly and firmly the circular blade according to the present invention in the maxillary bone and affording an absolute guarantee of a successfull operation.

Owing to the adopted particular construction, the blade will be perfectly stabilized already from its introduction;moreover, the circular shape affords the possibility of locating said blade 6 in such a way that the stub 6,which is slightly slanted,may be made substantially parallel to the adjoining teeth, thereby preventing anomalous forces from being generated,with respect to the remaining portion of the teeth.

Between the top member 3 and the stub 6 there is provided a shoulder groove 30, therein the mucous membrane will be housed which, being well structured will prevent infiltrations from occurring, and the mucous membrane will be protected from being directly compressed at the zone near the metal material forming the blade.

It should however be noted that the provision of the mentioned stub 6 would be susceptible of causing, under determined conditions, mastication troubles

-10-

or even hindering a proper regrowing of the mucous membrane about the top portion of the blade.

Accordingly, a modification is provided wherein the top portion 3(fig.7) of the circular blade according to the invention, is devoid of any stub portion 6 and provided instead of a through hole 31.

Within that hole, upon healing of the involved tissue, will be introduced a screw member 32, provided with a suitably shaped head 33, effective to act in a like manner as the mentioned stub, with the addition of a microscrew for affixing the dental prosthesis, which latter will be thus of the removable type.

The possibility is also anticipated of coupling two or more circular blades by means of a blade made of the same metal material.

The invention as disclosed is susceptible to several modifications and variations all thereof fall within the scope of the invention, and based on the concept thereof of providing a blade which, having a circular shape, can not sink in the maxillary bone, since it is directly supported by an osseous portion, which is embedded in the blade itself as the latter is applied.

Moreover all of the details may be replaced by other technically equivalent elements.

In practicing the invention, the used materials, though they are compatible to the intended use, as well as the contingent shape and size may be any, depending on the needs.

## C L A I M S

1- A circular blade structure, particularly for osseous implantation techniques, characterized in that it comprises a cylindrical hollow body, of reduced thickness, said cylindrical body (2) being opened at the bottom thereof and closed at the top thereof by a top member (3) coupled to the side surface (4) of said cylindrical body (2), at said top member a stub member (6) being provided, upwardly extending and effective to allow for a dental prosthesis to be applied, the side surface (4) of said cylindrical body (2) being effective to be housed in a cylindrical seat (10) having a shape mating that of said side surface (4) and formed on the maxillary bone.

2- A circular blade structure according to claim 1, characterized in that in said top member (3) a central through hole (31) is formed effective to house a screw member (32), having a shaped head (33).

3- A circular blade according to claim 1, characterized in that it comprises a plurality of through openings (5), formed through said side surface (4) of said cylindrical body.

4- A circular blade structure according to claim 1, characterized in that the axis of said stub(6) is slightly slanted with respect to the axis of said cylindrical body.

5- A circular blade structure according to claim 1, characterized in that it comprises a groove (30) near the base of said stub (6) effective to house the mucous membrane.

6- A circular blade structure, according to claim 1, characterized in that the inner face of said top member (3) rests on an osseous zone, embedded in the inside of said cylindrical body (2), as the latter is applied.

7- A circular blade structure, according to claim 1, characterized in that said blade is effective to auto-lock in said cylindrical seat (10), as said blade is introduced into said seat.

8- A cutter for making a cylindrical seat (10) effective to receive a blade according to claim 1, characterized in that it has a cylindrical cup shape provided with a lower cutting edge.

0083558

0083558

Fig. 1

Fig. 2

Fig. 3

**20**

**11**

**21**

$\underline{\text{F}_{\text{IG.}} \; 4}$

**10**

**11**

$\underline{\text{F}_{\text{IG.}} \; 5}$

**6**

**30**

**5**

**3 4**

$\underline{\text{F}_{\text{IG.}} 6}$

_Fig. 7_

31

3

_Fig. 8_

33

3

32